# DEMANDE DE BREVET EUROPEEN

(11) **EP 3 251 628 A1**
(43) Date de publication de la demande: **06.12.2017**
(21) Numéro de dépôt: 17173939.4
(22) Date de dépôt: 01.06.2017
(51) Int. Cl.: A61C 8/00

(54) **CAPUCHON DE CICATRISATION POUR UNE MOLAIRE ET PROTHESE PROVISOIRE POUR UNE MOLAIRE**

(30) Priorité: 01.06.2016 FR 1654960
(71) Demandeur: Domingang, Njomngang Olivier, 92800 Puteaux (FR)
(72) Inventeur: Domingang, Njomngang Olivier, 92800 Puteaux (FR)
(74) Mandataire: Poindron, Cyrille

(57) **Abrégé**

Capuchon de cicatrisation agencé pour recouvrir un implant dentaire pendant une phase de cicatrisation après une extraction dentaire, le capuchon de cicatrisation comprenant :
- une portion inférieure à une première extrémité du capuchon de cicatrisation, agencée pour accoster une portion supérieure de l'implant dentaire,
- une portion supérieure agencée à une deuxième extrémité du capuchon de cicatrisation, opposée à la première extrémité,
caractérisé en ce que la portion supérieure comprend au moins une rainure, et de préférence deux rainures, agencée(s) pour recevoir un fil de suture.

## Description

La présente invention concerne de manière générale un capuchon de cicatrisation agencé pour recouvrir un implant dentaire posé juste après une extraction dentaire. L'invention concerne également une prothèse dentaire provisoire intégrant un tel capuchon de cicatrisation.

Il est connu dans l'art antérieur des capuchons qui font partie d'un implant dentaire, tel que celui divulgué dans le document US6247933B1. Cependant, ce document ne donne aucune solution pour aider le chirurgien-dentiste à suturer et maintenir correctement les tissus autour d'un implant qui vient d'être posé après une extraction.

Le document WO 2013170224 A1 divulgue des dispositifs dentaires pour reconstruire une alvéole d'extraction.

Un but de la présente invention est de répondre aux inconvénients des documents de l'art antérieur mentionnés ci-dessus et en particulier, tout d'abord, de fournir un capuchon de cicatrisation pour un implant, qui améliore la cicatrisation du patient et facilite le geste du chirurgien-dentiste.

Pour cela un premier aspect de l'invention concerne un capuchon de cicatrisation agencé pour recouvrir un implant dentaire pendant une phase de cicatrisation après une extraction dentaire, le capuchon de cicatrisation comprenant :
- une portion inférieure à une première extrémité du capuchon de cicatrisation, agencée pour accoster une partie supérieure de l'implant dentaire,
- une portion supérieure agencée à une deuxième extrémité du capuchon de cicatrisation, opposée à la première extrémité,
caractérisé en ce que la portion supérieure comprend au moins une rainure, et de préférence deux rainures. Ladite au moins une rainure, et de préférence deux rainures, est (sont) agencée(s) pour recevoir un fil de suture. Le capuchon de cicatrisation selon la présente mise en oeuvre procure au moins une rainure sur sa face supérieure (celle qui sera visible une fois le capuchon fixé à l'implant), pour faire passer aisément au moins un fil de suture d'un côté à l'autre (du côté vestibulaire au côté palatin par exemple), pour maintenir contre le nouvel implant les tissus de la gencive par exemple. Ainsi le caillot sanguin est protégé par le capuchon de cicatrisation, et le geste du chirurgien-dentiste est facilité par la présence de ladite au moins une rainure pour faire passer le fil de suture.

En ce qui concerne la rainure, elle est agencée pour recevoir un fil de suture, et en particulier ses dimensions (notamment largeur, profondeur) sont donc adaptées et suffisantes pour recevoir un fil de suture. On peut prévoir une largeur de rainure comprise entre 2 mm et 1.5 mm par exemple, et une profondeur d'au moins 1.5 mm ou 2mm à au moins un endroit de la rainure, si celle-ci ne présente pas une profondeur constante.

Le capuchon de cicatrisation présente une dimension extérieure suffisante pour recouvrir l'implant dentaire et la portion inférieure à une première extrémité du capuchon de cicatrisation, agencée pour accoster l'implant dentaire forme simplement une surface de contact avec l'implant. Autrement dit, la portion inférieure est destinée à entrer en contact avec l'implant dentaire.

En particulier, la portion inférieure peut présenter un diamètre équivalant à celui de l'implant dentaire (généralement compris entre 4 mm et 6.5 mm), et la portion supérieure présente une dimension externe qui dépasse pour recouvrir l'implant dentaire.

Avantageusement, le capuchon de cicatrisation comprend un trou de passage pour une vis de fixation du capuchon de cicatrisation sur l'implant, et la portion supérieure présente une forme de dôme avec le trou de passage débouchant au centre du dôme. Une telle forme de dôme présente les avantages suivants :
- cela facilite la mise en tension des fils de suture pour plaquer les tissus mous contre le capuchon de cicatrisation afin d'assurer la fermeture de l'alvéole post-extractionnelle,
- cela permet une protection du caillot sanguin péri-implantaire, ainsi que des matériaux de comblement introduits dans l'alvéole après extraction,
- cela permet un auto-nettoyage plus facile au-dessus du capuchon, assurant ainsi une bonne hygiène,
- pour finir, cette forme en dôme, joue le même rôle que les membranes de protection osseuse (en matériaux non-résorbables) afin d'assurer une bonne ostéo-intégration de l'implant. En d'autres termes, le capuchon selon la présente invention permet de poser un implant immédiatement après extraction d'une dent, au lieu d'attendre 3 mois de cicatrisation après extraction pour poser un implant.

Avantageusement, ladite au moins une rainure, et de préférence deux rainures, est formée sur le dôme, à l'exclusion d'une zone périphérique du dôme. En d'autres termes, la ou les rainures ne débouchent pas sur la périphérie du dôme. Ainsi, une accumulation éventuelle ou potentielle d'impuretés dans la ou les rainures ne peut pas aller ou être en contact avec les tissus du patient, ce qui limite les risques d'infection.

Avantageusement, la portion inférieure comprend une gorge circulaire agencée pour accueillir des tissus et les conformer à la forme de la gorge circulaire pendant la phase de cicatrisation. Cette mise en oeuvre, dans le cas d'une implantation au niveau des tissus (une partie de l'implant dépasse donc un peu de l'os), permet de préformer la gencive à la forme d'une future couronne, ce qui améliore la pose de cette dernière. Autrement dit, la gorge circulaire est destinée à être en contact avec des tissus tenus contre le capuchon par les fils de suture. Les tissus mous sont plaqués contre la gorge circulaire qui forme donc simplement une paroi de contact.

Avantageusement, le capuchon de cicatrisation comprend une portion latérale de révolution et de forme évasée qui relie la portion inférieure avec la portion supérieure. En d'autres termes, la portion inférieure présente une dimension égale ou même inférieure à la partie supérieure de l'implant. Cette mise en oeuvre, dans le cas d'une implantation au niveau de l'os, garantit que la portion inférieure du capuchon de cicatrisation ne viendra pas en appui sur l'os, et permet de préformer la gencive à la forme d'une future prothèse, ce qui améliore la pose de cette dernière.

Avantageusement, la portion supérieure comprend deux méplats agencés en périphérie de la portion supérieure. Cette mise en oeuvre, dans le cas d'une implantation à la place d'une molaire maxillaire, permet placer le capuchon de cicatrisation sans interférence avec les dents voisines. En d'autres termes, le capuchon présente deux biseaux proximaux (un mésial et un autre distal), l'arc de cercle le plus important de la tête est en position vestibulaire et la partie la plus étroite est en position palatine.

Avantageusement, la portion supérieure comprend une surface supérieure rugueuse de sorte à former une interface d'accroche pour une couronne provisoire en résine. Par exemple, on peut prévoir une rugosité Ra supérieure à 12.5µm, et plus avantageusement supérieure à 25µm.

Avantageusement, la portion supérieure comprend une surface plane agencée pour positionner une couronne dentaire en résine. La partie plane peut faire saillie au dessus du dôme, et forme alors un cylindre en saillie ou en protrusion par rapport au dôme. Cette surface plane en protubérance est donc simplement destinée à former une surface de contact avec la couronne dentaire.

Avantageusement, la portion inférieure comprend un pied de centrage agencé pour centrer le capuchon de cicatrisation sur l'implant dentaire. Un tel pied de centrage (un plot reçu dans un alésage de l'implant) permet de centrer efficacement le capuchon de cicatrisation. Autrement dit, le pied de centrage est destiné à positionner le capuchon de cicatrisation par rapport à l'implant.

Avantageusement, le capuchon comprend des moyens de blocage en rotation par rapport à l'implant. Ainsi, avec un outil qui s'engage dans la dite au moins une rainure, il est possible de compenser un couple de serrage de la vis de fixation du capuchon sur l'implant. La liaison osseuse entre l'implant et le patient n'est alors pas sollicitée lors du serrage - desserrage de la vis de fixation. En effet, la liaison implant-os n'est pas sollicitée, puisque tous les efforts de serrage sont repris par le capuchon (via les moyens de blocage en rotation par rapport à l'implant et les rainures engagées avec l'outil).

Avantageusement, le capuchon de cicatrisation est réalisé en matériau bio compatible, tel que du titane, de l'acier inoxydable, ou encore de l'oxyde de zirconium (zircone).

Avantageusement, la portion supérieure présente un diamètre extérieur compris dans une plage allant de 7mm à 11 mm et plus préférentiellement de 8mm à 10mm. Cette dimension permet au capuchon de bien recouvrir l'alvéole d'extraction (et donc l'implant dentaire puisque ce dernier est dans l'alvéole d'extraction) et de protéger le caillot sanguin. Ainsi, il est possible de poser immédiatement un implant après extraction d'une dent, et de protéger le site d'extraction avec le capuchon. Il n'y a plus besoin d'attendre la cicatrisation après extraction avant de poser un implant.

Un deuxième aspect de l'invention concerne une prothèse dentaire provisoire comprenant au moins :
- un capuchon de cicatrisation selon le premier aspect de l'invention,
- un implant dentaire,
- une vis de fixation du capuchon de cicatrisation sur l'implant dentaire.

Avantageusement, la vis de fixation comprend une tête avec une portion latérale conique, de sorte à retenir une couronne dentaire sur le capuchon de cicatrisation. Une telle portion conique est avantageusement prévue en contre-dépouille (c'est-à-dire avec le cône s'évasant vers la partie supérieure de la vis), ce qui retient naturellement la couronne provisoire.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un premier mode de réalisation d'un capuchon de cicatrisation selon l'invention ;
- la figure 2 représente une autre vue en perspective du capuchon de cicatrisation de la figure 1 ;
- la figure 3 représente une vue en coupe du capuchon de cicatrisation de la figure 1 ;
- la figure 4 représente une vue en perspective d'un deuxième mode de réalisation d'un capuchon de cicatrisation selon l'invention ;
- la figure 5 représente une autre vue en perspective du capuchon de cicatrisation de la figure 4 ;
- la figure 6 représente une vue en coupe du capuchon de cicatrisation de la figure 4 ;
- la figure 7 représente une vue de dessus d'une option de mise en oeuvre du premier ou deuxième mode de réalisation ;
- la figure 8 représente une coupe verticale du capuchon de la figure 1 monté sur un implant dentaire posé sur un patient ;
- la figure 9 représente une coupe verticale du capuchon de la figure 4 monté sur un implant dentaire posé sur un patient ;
- la figure 10 représente une vue en coupe selon un plan vertical du montage de la figure 9, mais décalé en avant ou en arrière par rapport à l'axe du capuchon de cicatrisation.

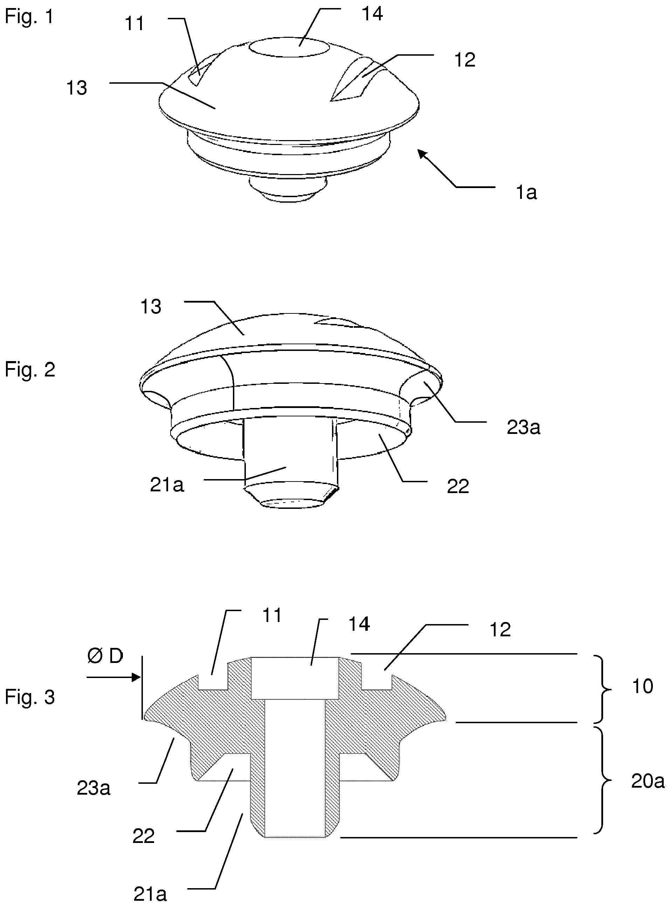

La figure 1 représente une vue en perspective d'un premier mode de réalisation d'un capuchon de cicatrisation 1a, vu de dessus. Le capuchon de cicatrisation 1a comprend une portion supérieure 10 et une portion inférieure 20a comme le montre la figure 3. La portion supérieure 10 est en forme de dôme 13, et un trou de passage 14 pour une vis de fixation 3 débouche dans la partie centrale du dôme 13.

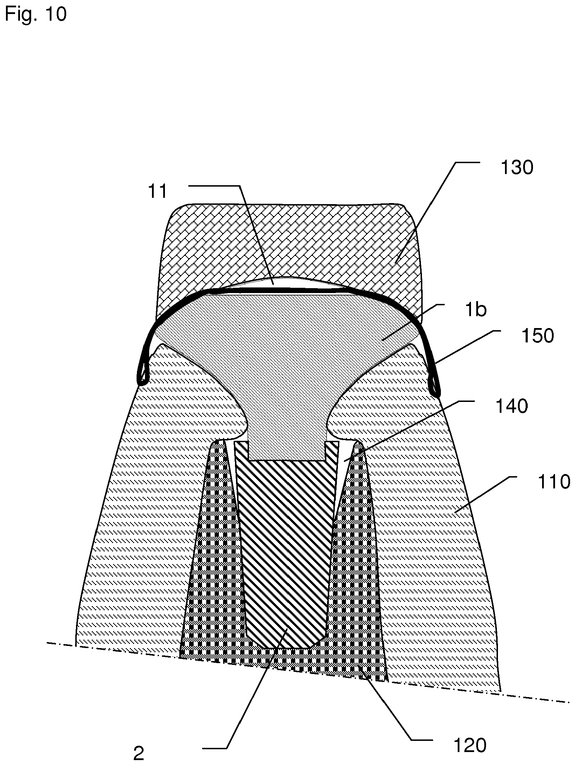

Deux rainures 11 et 12 sont formées dans la portion supérieure du capuchon de cicatrisation 1a, et permettent de passer un ou plusieurs fils de suture 150 de part et d'autre du capuchon, comme on le voit par exemple figure 10, où le plan de coupe passe par la rainure 11 par exemple. A titre d'exemple, les rainures présentent une largeur comprise entre 1.5 et 2 mm, et une profondeur au plus profond de 2 mm.

Comme mentionné précédemment, la forme en dôme de la portion supérieure du capuchon de cicatrisation 1a permet notamment de tendre les fils de suture 150 et de nettoyer aisément cette partie qui est exposée aux aliments. On peut prévoir un dôme 13 avec un rayon de courbure compris dans une plage de valeurs allant de 5mm à 8mm, et plus précisément de 6mm à 7mm.

La figure 2 montre le capuchon de cicatrisation 1a en perspective, vu de dessous. La portion inférieure 20a identifiée également figure 3 comprend un pied de centrage 21 a, un retour 22 et une gorge circulaire 23a (en forme de partie évasée) sous le dôme 13.

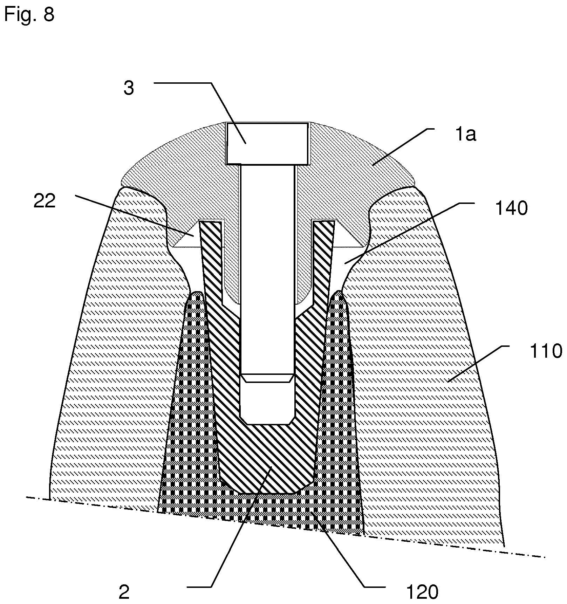

Le capuchon 1a est un capuchon destiné à être posé sur un implant dentaire 2 comme on le voit figure 8, qui dépasse de l'os du patient, sa portion inférieure 20a sera donc située au niveau des tissus mous du patient. Le pied de centrage 21 a est destiné à être accueilli par l'implant dentaire lui-même, le retour 22 venant en butée sur une face supérieure de l'implant dentaire, et la gorge circulaire 23a aura pour but de recevoir et conformer les tissus mous (efficacement plaqués contre le capuchon de cicatrisation 1a par les fils de sutures 150 passant dans les rainures ou gorges 11 et 12).

Enfin, le diamètre de la portion supérieure 10 est suffisant pour pouvoir couvrir toute l'alvéole d'extraction d'une dent. En d'autres termes, la portion supérieure présente un diamètre extérieur D compris dans une plage allant de 7mm à 11 mm et plus préférentiellement de 8mm à 10mm. Cette dimension permet au capuchon de cicatrisation 1a de bien recouvrir l'alvéole d'extraction et de protéger le caillot sanguin. Ainsi, il est possible de poser immédiatement un implant après extraction d'une dent, et de protéger le site d'extraction avec le capuchon de cicatrisation 1a. Il n'y a plus besoin d'attendre la cicatrisation (qui dure environ 3 mois) après extraction avant de poser un implant. Cette mise en oeuvre permet donc une implantation immédiate de l'implant, recouvert de son capuchon de cicatrisation après extraction, ce qui évite de faire cette implantation 3 mois après.

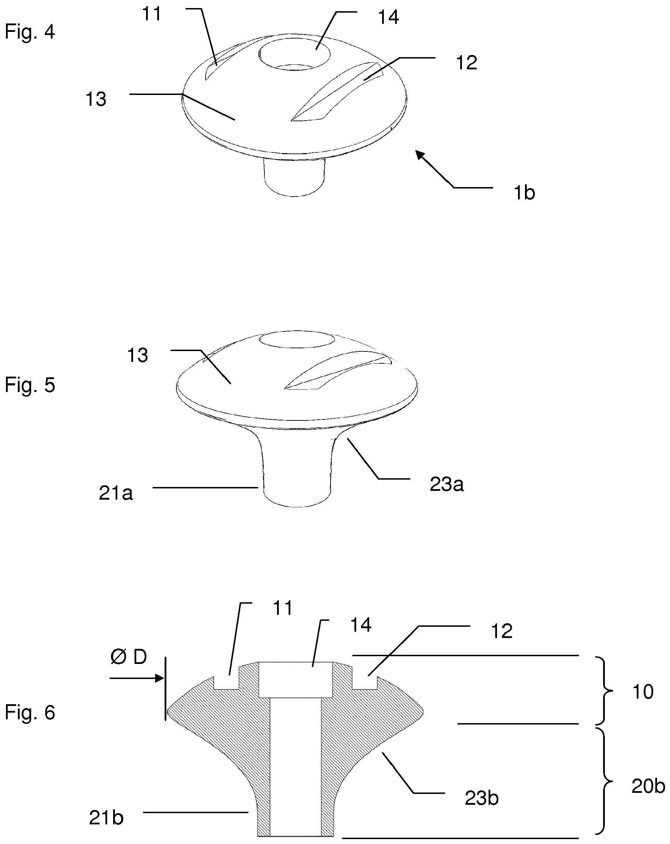

La figure 4 représente une vue en perspective d'un deuxième mode de réalisation d'un capuchon de cicatrisation 1 b. La portion supérieure 10 (dôme 13 et rainures 11 et 12, trou de passage 14) est identique à celle du premier mode de réalisation et ne sera donc pas re-décrite dans le détail.

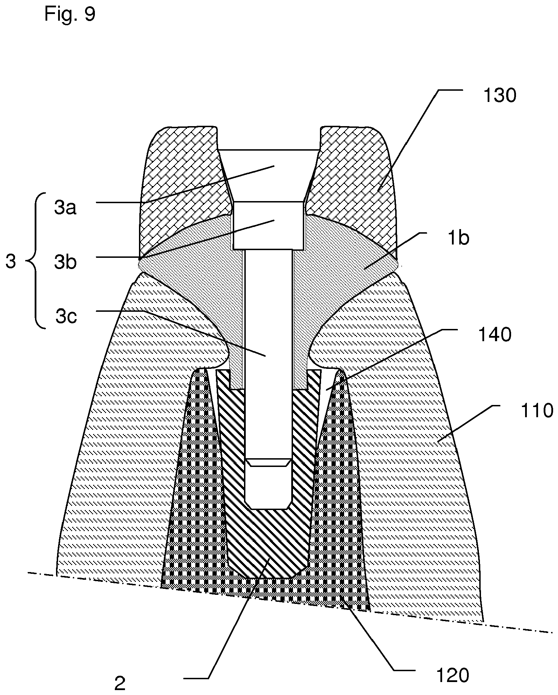

En ce qui concerne la portion inférieure 20b, visible figures 5 et 6, cette dernière est un peu différente, en raison de la position de l'implant par rapport à l'os du patient. En effet, selon ce mode de réalisation, le capuchon de cicatrisation 1 b est destiné à recouvrir un implant dentaire posé plus profondément dans l'os, avec sa partie supérieure affleurant l'os (comme on le voit figures 9 et 10). En conséquence, la portion inférieure du capuchon de cicatrisation 1 b ne doit pas venir contacter l'os pour éviter toute sollicitation de ce dernier, et le pied de centrage 21 b est plus petit, et directement relié à la partie évasée 23b qui va jusqu'au dôme 13.

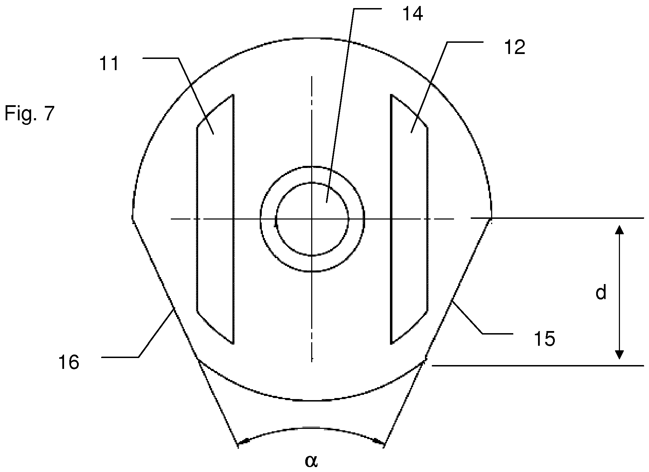

La figure 7 représente en vue de dessus une option applicable aussi bien au premier comme au deuxième mode de réalisation. En particulier, lors d'une implantation dans un maxillaire, il est avantageux de prévoir des méplats 15 et 16 pour éviter toute interférence avec les dents voisines du site d'extraction.

Avantageusement, l'angle α est compris dans une plage allant de 40° à 60°, et la distance d peut être comprise dans une plage allant de 3mm à 5.6mm, et plus avantageusement de 3.3mm à 4.3mm. Il est à noter que les méplats sont ici symétriques par rapport à un axe vertical de la figure 7, mais on peut envisager des méplats non symétriques.

La figure 8 représente une coupe verticale du capuchon de cicatrisation 1a (selon le premier mode de réalisation) monté avec une vis de fixation 3 sur un implant dentaire 2 posé sur un patient. L'implant dentaire 2 est posé immédiatement après extraction dentaire dans l'os 120 du patient, la partie supérieure de l'implant dentaire 2 dépassant de l'os 120. Le capuchon de cicatrisation 1 a est donc centré sur l'implant dentaire 2 par le biais du pied de centrage 21 a qui est concentrique à la portion supérieure 1 a, comme on le voit sur la figure 8.

L'implant dentaire présente typiquement un diamètre compris dans une plage de valeurs allant de 4 mm à 6.5 mm. On peut donc avoir un diamètre du pied de centrage 21a compris entre 2.5 mm et 4 mm, par exemple égal à 3 mm. Le diamètre extérieur du retour 22 peut être compris entre 5 mm et 7.5 mm, et par exemple être égal à 6.5 mm.

Le retour 22 est en appui sur l'implant dentaire 2, et les tissus mous 110 sont plaqués sur la gorge circulaire 23a, de la même manière que sur la figure 10, par des fils de suture 150 passant dans les rainures 11 et 12. Comme on le voit sur la figure 8, le grand diamètre du dôme 13 recouvre complétement l'alvéole d'extraction, et protège l'espace 140 et le caillot ainsi qu'un éventuel matériau de comblement qui s'y trouve(nt). Il est ainsi possible de poser l'implant dentaire 2 et le capuchon de cicatrisation 1a directement et immédiatement après extraction d'une dent, telle qu'une molaire par exemple. Comme on le voit sur les figures 8 et 10, la gorge circulaire 23a forme simplement une surface de contact pour le tissus mous.

Lors de la cicatrisation, les tissus mous 110 vont donc prendre la forme de la gorge circulaire 23a, ce qui les conforme à la forme de la future prothèse définitive qui pourra être posée dans un délai de 3 mois après extraction. Le capuchon selon l'invention permet de gagner 3 mois, et une consultation.

En résumé, lors d'un même rendez-vous, le chirurgien dentiste extrait une dent, et peut immédiatement poser l'implant dentaire 2, ensuite le capuchon de cicatrisation, et suturer les tissus mous, tout en les plaquant contre la paroi de la gorge circulaire 23a, grâce aux rainures 11 et 12.

La figure 9 représente une coupe verticale du capuchon de cicatrisation 1 b (selon le deuxième mode de réalisation) monté avec une vis de fixation 3 sur un implant dentaire 2 posé sur un patient. L'implant dentaire 2 est posé immédiatement après extraction dentaire dans l'os 120 du patient, la partie supérieure de l'implant dentaire 2 affleurant l'os 120.

Le capuchon de cicatrisation 1b est fixé sur l'implant dentaire 2 avec une vis de fixation 3, avec le pied de centrage 21 b engagé dans un alésage de l'implant dentaire 2, il n'y a donc aucun risque de contact entre la capuchon de cicatrisation 1 b et l'os 120, ce qui garantit un retrait ultérieur du capuchon de cicatrisation 1b sans sollicitation sur l'os 120 (car l'ostéo-intégration se fait uniquement entre l'implant dentaire 2 et l'os 120).

Comme on le voit à la figure 10 (une coupe dans un plan parallèle au plan de coupe de la figure 8, mais qui passe par la rainure 11, et non pas par l'axe du capuchon de cicatrisation 1 b ou de la vis de fixation 3), des fils de suture 150 plaquent les tissus mous du patient tout contre la partie évasée 23b du capuchon de cicatrisation 1 b. Conjugué au diamètre extérieur du dôme 13, l'espace 140, occupé par un caillot sanguin et éventuellement un matériau de comblement (non visibles), est bien protégé et isolé des contaminations éventuelles par des résidus alimentaires par exemple.

L'invention permet donc un plaquage efficace aisé à effectuer par le chirurgien avec les rainures 11 et 12, et une protection optimale de l'alvéole d'extraction, si bien qu'il est possible de poser l'implant dentaire 2 immédiatement après extraction d'une dent.

Enfin, une dent provisoire 130 a été posée sur le capuchon de cicatrisation 1b. Il s'agit par exemple d'une dent provisoire en résine qui est moulée in situ après pose du capuchon de cicatrisation 1 b. Le maintien de la dent provisoire 130 est effectué par une forme conique 3a dépassante de la tête 3b de la vis de fixation 3 (dont la tige 3c est engagée dans l'implant dentaire 2). Pour une fixation optimale, il est également prévu d'imposer une rugosité importante sur la surface du dôme 13, afin de garantir une bonne accroche de la résine. On peut prévoir par exemple une rugosité Ra supérieure ou égale à 12.5µm, et plus avantageusement supérieure ou égale à 25µm.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à une extraction dentaire, et le capuchon de cicatrisation selon l'invention est bien adapté pour être utilisé après l'extraction d'une molaire, en position maxillaire ou mandibulaire.

## Revendications

1. Capuchon de cicatrisation (1a ; 1 b) agencé pour recouvrir un implant dentaire pendant une phase de cicatrisation après une extraction dentaire, le capuchon de cicatrisation (1a ; 1 b) comprenant :
- une portion inférieure (20a ; 20b) à une première extrémité du capuchon de cicatrisation (1a ; 1b), agencée pour accoster une partie supérieure de l'implant dentaire,
- une portion supérieure (10) agencée à une deuxième extrémité du capuchon de cicatrisation (1 a ; 1 b), opposée à la première extrémité,
**caractérisé en ce que** la portion supérieure (10) comprend au moins une rainure (11, 12), et de préférence deux rainures, agencée(s) pour recevoir un fil de suture (150), **caractérisé en ce que** le capuchon de cicatrisation (1a ; 1b) comprend un trou de passage (14) pour une vis de fixation (3) du capuchon de cicatrisation (1a ; 1b) sur l'implant (2), dans lequel la portion supérieure (10) présente une forme de dôme (13) avec le trou de passage (14) débouchant au centre du dôme (13).

2. Capuchon de cicatrisation (1a ; 1b) selon la revendication précédente, dans lequel la portion inférieure (20a ; 20b) comprend une gorge circulaire (23a) agencée pour accueillir des tissus et les conformer à la forme de la gorge circulaire (23a) pendant la phase de cicatrisation.

3. Capuchon de cicatrisation (1a ; 1 b) selon l'une des revendications 1 ou 2, comprenant une portion latérale (23b) de révolution et de forme évasée qui relie la portion inférieure (20b) avec la portion supérieure (10).

4. Capuchon de cicatrisation (1a ; 1 b) selon l'une des revendications précédentes, dans lequel la portion supérieure (10) comprend deux méplats (15, 16) agencés en périphérie de la portion supérieure (10).

5. Capuchon de cicatrisation (1a ; 1 b) selon l'une des revendications précédentes, dans lequel la portion supérieure (10) comprend une surface supérieure rugueuse de sorte à former une interface d'accroche pour une couronne provisoire en résine.

6. Capuchon de cicatrisation (1 a ; 1 b) selon la revendication précédente, dans lequel la portion supérieure (10) comprend une surface plane agencée pour positionner une couronne dentaire en résine.

7. Capuchon de cicatrisation (1a ; 1 b) selon l'une des revendications précédentes, dans lequel la portion inférieure (20a ; 20b) comprend un pied de centrage (21 a ; 21 b) agencé pour centrer le capuchon de cicatrisation (1 a ; 1 b) sur l'implant dentaire (2).

8. Prothèse dentaire provisoire comprenant au moins :
- un capuchon de cicatrisation (1a ; 1 b) selon l'une des revendications précédentes,
- un implant dentaire (2),
- une vis de fixation (3) du capuchon de cicatrisation (1a ; 1 b) sur l'implant dentaire.

9. Prothèse dentaire provisoire selon la revendication précédente, dans laquelle la vis de fixation (3) comprend une tête (3b) avec une portion (3a) latérale conique, de sorte à retenir une couronne dentaire sur le capuchon de cicatrisation (1 a ; 1 b).
